# DEMANDE DE BREVET EUROPEEN

(11) **EP 0 556 125 A1**
(43) Date de publication de la demande: **18.08.1993**
(21) Numéro de dépôt: 93400352.6
(22) Date de dépôt: 11.02.1993
(51) Int. Cl.: B60S 1/34

(54) **Essuie-glace de véhicule automobile comportant des moyens pour faire varier la pression d'essuyage**

(30) Priorité: 12.02.1992 FR 9201568
(71) Demandeur: PAUL JOURNEE S.A., F-92700 Colombes (FR)
(72) Inventeur: Journee, Maurice, F-60240 Reilly (FR)
(74) Mandataire: Lemaire, Marc

(57) **Abrégé**

L'invention propose un essuie-glace notamment de véhicule automobile, du type comportant un bras d'essuie-glace (12) qui porte au moins un balai d'essuyage et qui est monté articulé autour d'un axe d'articulation (X-X) sur une tête d'entraînement (20) du bras d'essuie-glace (12), et des moyens (24) agencés entre la tête d'entraînement (20) et le bras d'essuie-glace (12) pour appliquer à ce dernier un couple d'essuyage et qui comportent au moins un ressort (26) qui applique au bras d'essuie-glace (12) un couple nominal d'essuyage sensiblement constant et un dispositif (36) d'application d'un couple complémentaire comportant un actionneur (36) dont le corps (42) est associé à la tête d'entraînement (20) et dont l'organe de sortie (40) est relié au bras d'essuie-glace (12), caractérisé en ce que le corps (42) de l'actionneur est fixé à la tête d'entraînement (20) avec interposition de moyens (46, 48) déformables élastiquement.

## Description

La présente invention concerne un essuie-glace notamment de véhicule automobile.

L'invention concerne plus particulièrement un dispositif d'essuie-glace du type comportant au moins un bras d'essuie-glace qui porte au moins un balai d'essuyage, par exemple par l'intermédiaire d'un porte-balai à étriers et qui est monté articulé, autour d'un axe d'articulation, sur une tête d'entraînement de l'essuie-glace qui est soumise à un mouvement de rotation alternatif par un arbre d'essuyage qui permet d'obtenir un balayage de la vitre à essuyer.

Le bras d'essuie-glace porte, par l'intermédiaire du porte-balai, un balai d'essuyage articulé qui est apte à essuyer la surface vitrée telle que par exemple un pare-brise de véhicule automobile.

Afin d'obtenir un essuyage correct de la surface vitrée, il est nécessaire que la lame d'essuyage de l'essuie-glace soit appliquée sur la surface vitrée à essuyer avec une force de pression, ou force d'essuyage, importante.

A cet effet, il est généralement prévu au moins un ressort tel que par exemple un ressort hélicoïdal de traction qui est disposé entre la tête d'entraînement et le reste du bras d'essuie-glace et qui applique en fait un couple nominal d'essuyage sensiblement constant au bras d'essuie-glace, autour de son axe d'articulation, de manière à venir plaquer la lame d'essuyage contre la vitre.

Du fait de la conception de ce dispositif, la lame est appuyée pendant le mouvement de balayage de la surface vitrée, mais également en position de repos du dispositif d'essuie-glace.

Du fait de la permanence de l'effort nominal d'essuyage qui est appliqué à la lame lorsque le dispositif d'essuie-glace est au repos, on constate que la lame conserve une forme résiduelle résultant de l'écrasement de son profil contre la surface vitrée, la lame ne procurant plus alors un essuyage convenable de la surface vitrée.

Il est donc souhaitable de pouvoir réduire l'effort nominal d'essuyage appliqué à la lame lorsque l'essuie-glace est au repos.

Par ailleurs, la qualité d'essuyage de la surface vitrée dépend en fonctionnement de la maîtrise de l'effort d'essuyage qui est appliqué à la lame, et ceci notamment en fonction de la vitesse de déplacement du véhicule et en fonction de la fréquence du mouvement de balayage de l'essuie-glace.

Il est également connu d'augmenter la force d'essuyage au moyen d'appendices aérodynamiques montés sur le bras d'essuie-glace, mais ces dispositifs ne permettent pas de maîtriser avec précision la valeur de la force d'essuyage et ne permettent notamment pas de la faire varier de manière contrôlée en fonction d'un paramètre de fonctionnement du véhicule.

Afin de remédier aux inconvénients qui viennent d'être mentionnés, il a déjà été proposé un essuie-glace du type mentionné précédemment dans lequel les moyens agencés entre la tête d'entraînement et le bras d'essuie-glace pour appliquer à ce dernier un couple d'essuyage comportent au moins un ressort qui applique au bras un couple nominal d'essuyage sensiblement constant, et un dispositif pour appliquer au bras un couple complémentaire dont la valeur algébrique est réglable de manière à pouvoir augmenter ou réduire la valeur du couple d'essuyage en fonction d'au moins un paramètre de fonctionnement du véhicule.

Le dispositif d'application du couple complémentaire comporte par exemple un actionneur associé à la tête d'entraînement et une tige de sortie de l'actionneur reliée au bras d'essuie-glace.

Bien qu'une telle conception donne satisfaction, on constate que l'ensemble du dispositif est soumis à des efforts cycliques qui résultent notamment de la forme galbée du pare-brise qui, lors du fonctionnement de l'essuie-glace, provoque un pivotement cyclique de faible amplitude du bras d'essuie-glace autour de son axe d'articulation.

Ces oscillations du bras d'essuie-glace se traduisent en effet par des contraintes cycliques appliquées à l'actionneur et notamment aux moyens de fixation du corps de l'actionneur sur la tête d'entraînement.

Afin de remédier à cet inconvénient, la présente invention propose un essuie-glace du type mentionné précédemment, caractérisé en ce que le corps de l'actionneur est fixé à la tête d'entraînement avec interposition de moyens déformables élastiquement.

Selon d'autres caractéristiques de l'invention :
- l'actionneur est un moteur linéaire qui comporte une tige de sortie coulissant axialement et le corps de l'actionneur est fixé à la tête d'entraînement avec interposition d'au moins un support élastique ;
- le corps de l'actionneur est fixé à la tête d'entraînement avec interposition de deux supports élastiques agencés au voisinage des deux extrémités axiales opposées du corps de l'actionneur ;
- le support élastique agencé à l'une des deux extrémités du corps de l'actionneur est traversé par la tige de sortie de l'actionneur ;
- les moyens déformables élastiquement comportent au moins un bloc en matériau élastomère naturel ou synthétique ;
- deux blocs en matériau élastomère sont prévus dont chacun est fixé d'une part à l'une des extrémités axiales du corps de l'actionneur et d'autre part à une platine de fixation ;
- les blocs en matériau élastomère sont fixés par adhérisation ;
- la tige de sortie de l'actionneur s'étend selon une direction sensiblement perpendiculaire à l'axe d'articulation du bras d'essuie-glace.

D'autres caractéristiques et avantages de l'invention apparaîtront à la lecture de la description détaillée qui va suivre pour la compréhension de laquelle on se reportera au dessin annexé dans lequel :
- La figure 1 est une vue en coupe transversale partielle d'un dispositif d'essuie-glace réalisé conformément aux enseignements de l'invention ; et
- la figure 2 est une vue de dessus, avec arrachement partiel, du dispositif illustré à la figure 1.

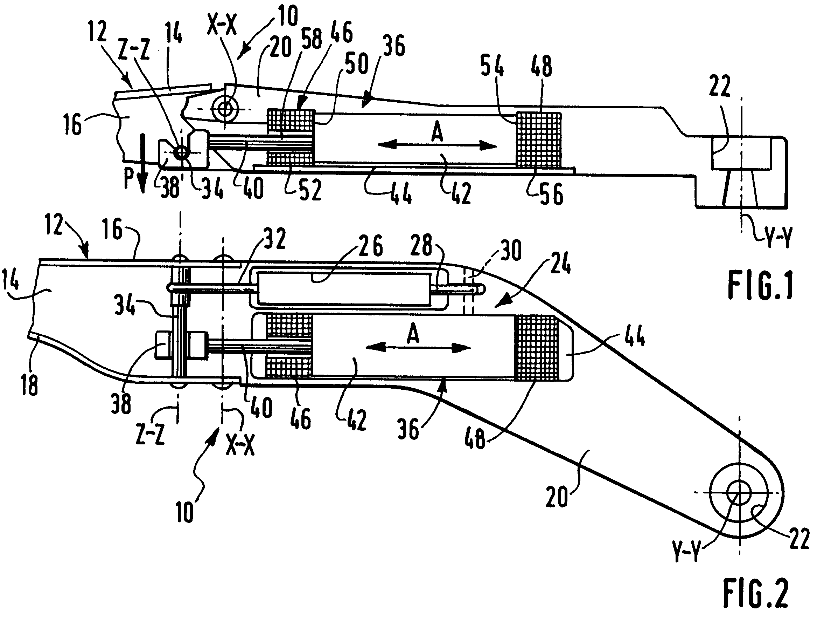

Le disposif d'essuie-glace 10 illustré aux figures 1 et 2 comporte un bras d'essuie-glace 12 formant porte-balai dont la portion illustrée sur les figures se présente sous la forme d'un profilé creux en U inversé constitué par un dos 14 et par deux flancs ou joues latérales perpendiculaires 16 et 18.

Le bras d'essuie-glace 12 est articulé sur une tête d'entraînement 20 autour d'un axe géométrique X-X qui s'étend selon une direction sensiblement perpendiculaire à la direction générale du bras d'essuie-glace.

La tête d'entraînement 20 comporte, à son extrémité opposée à l'axe d'articulation X-X, un alésage 22 d'axe Y-Y sensiblement perpendiculaire à l'axe d'articulation qui est prévu pour recevoir un arbre d'essuyage (non représenté) qui permet d'entraîner en rotation la tête d'entraînement 20 en un mouvement alternatif par tout moyen tel qu'un moteur d'essuyage (non représenté).

Selon une technique connue, le dispositif d'essuie-glace 10 comporte des moyens 24 qui permettent d'appliquer au bras d'essuyage 12 un effort ou pression d'essuyage P de valeur sensiblement constante et orienté en direction de la surface à essuyer (non représentée).

Le dispositif 24 est ici constitué par un ressort hélicoïdal de traction 26 dont une extrémité 28 est accrochée sur une tige transversale 30 de la tête d'entraînement 20 et dont l'extrémité opposée 32 est accrochée sur une tige transversale 34 du bras d'essuie-glace dont l'axe géométrique Z-Z est parallèle à l'axe d'articulation X-X.

Comme on peut le voir à la figure 1, l'axe Z-Z est situé en-dessous de l'axe X-X, c'est-à-dire entre ce dernier et la surface à essuyer de manière que le ressort 26 applique un couple nominal au balai 12 autour de son axe X-X dont il résulte une pression d'essuyage P appliquée à la lame d'essuyage.

Le dispositif d'essuie-glace 10 comporte également des moyens pour appliquer au bras d'essuie-glace 12 un couple complémentaire qui permet de faire varier la valeur de la pression d'essuyage P.

Ces moyens sont pour l'essentiel constitués par un actionneur 36 agencé dans la tête d'entraînement 20 et par une pièce de liaison 38 qui relie la tige de sortie 40 de l'actionneur 36 au bras d'essuie-glace 12.

Dans le mode de réalisation illustré aux figures, l'actionneur 36 est du type linéaire et sa direction générale d'actionnement A s'étend selon une direction sensiblement perpendiculaire à l'axe d'articulation X-X du bras 12 sur la tête d'entraînement 20.

La tige 40 de l'actionneur 36 fait saillie, parallèlement à la direction A, à l'extérieur du corps 42 de l'actionneur.

Conformément à l'invention, le corps 42 de l'actionneur 36 est fixé sur une platine 44 de la tête d'entraînement 20 par l'intermédiaire de deux blocs déformables élastiquement en matériau élastomère 46 et 48.

Le premier support élastique 46 est adhérisé contre la face axiale d'extrémité 50 du corps 42 de l'actionneur 36 à travers laquelle la tige 40 fait saillie.

Le bloc 46 est également adhérisé par sa face inférieure 52 sur la platine 44.

Le second bloc 48 est adhérisé sur la face axiale d'extrémité 54 du corps 42 opposée à la face 50 tandis que sa face inférieure 56 est adhérisée sur la platine 44.

On comprend que le corps 42 de l'actionneur 36 est ainsi monté sur la platine 44 avec l'interposition des deux blocs formant supports élastiques 46 et 48.

Grâce à cet agencement conforme aux enseignements de l'invention, l'ensemble de l'actionneur 36 peut encaisser les sollicitations cycliques qui résultent, lors du mouvement de balayage de l'essuie-glace, des oscillations angulaires du bras 12 autour de l'axe X-X et qui se traduisent par des sollicitations cycliques appliquées à l'actionneur 36 selon la direction A par l'intermédiaire de la tige 34 qui est reçue dans la pièce 38 en forme de fourche.

Le premier bloc 46 comporte un passage 58 pour permettre le libre coulissement de la tige 40 de l'actionneur 36.

L'actionneur 36 peut être de tout type connu tel que par exemple un vérin électrique.

L'invention n'est pas limitée au mode de réalisation qui vient d'être décrit.

Les blocs en matériau déformable élastiquement 46 et 48 peuvent être remplacés par tout moyen équivalent tel que par exemple des ensembles à ressorts qui permettent d'assurer la suspension élastique de l'actionneur 36 par rapport à la tête d'entraînement 20.

## Revendications

1. Essuie-glace, notamment de véhicule automobile, du type comportant un bras d'essuie-glace (12) qui porte au moins un balai d'essuyage et qui est monté articulé autour d'un axe d'articulation (X-X) sur une tête d'entraînement (20) du bras d'essuie-glace (12), et des moyens (24) agencés entre la tête d'entraînement (20) et le bras d'essuie-glace (12) pour appliquer à ce dernier un couple d'essuyage et qui comportent au moins un ressort (26) qui applique au bras d'essuie-glace (12) un couple nominal d'essuyage sensiblement constant et un dispositif (36) d'application d'un couple complémentaire comportant un actionneur (36) dont le corps (42) est associé à la tête d'entraînement (20) et dont l'organe de sortie (40) est relié au bras d'essuie-glace (12), caractérisé en ce que le corps (42) de l'actionneur est fixé à la tête d'entraînement (20) avec interposition de moyens (46, 48) déformables élastiquement.

2. Essuie-glace selon la revendication 1, caractérisé en ce que l'actionneur (36) est un moteur linéaire qui comporte une tige de sortie coulissant axialement (40) et en ce que le corps (42) de l'actionneur est fixé à la tête d'entraînement (20) avec interposition d'au moins un support élastique (46, 48).

3. Essuie-glace selon la revendication 2, caractérisé en ce que le corps (42) de l'actionneur (36) est fixé à la tête d'entraînement (20) avec interposition de deux supports élastiques (46, 48) agencés au voisinage des deux extrémités axiales opposées (50, 54) du corps (42) de l'actionneur (36).

4. Esssuie-glace selon la revendication 3, caractérisé en ce que le support élastique (46) agencé à l'une des deux extrémités (50) du corps (42) de l'actionneur (36) est traversé (58) par la tige de sortie (40) de l'actionneur (36).

5. Essuie-glace selon l'une quelconque des revendications 2 à 4, caractérisé en ce que les moyens déformables élastiquement comportent au moins un bloc (46, 48) en matériau élastomère naturel ou synthétique.

6. Essuie-glace selon la revendication 5, prise en combinaison avec l'une des revendications 3 ou 4, caractérisé en ce qu'il comporte deux blocs (46, 48) en matériau élastomère dont chacun est fixé d'une part à l'une des extrémités (50, 54) du corps (42) de l'actionneur (36) et d'autre part à une platine de fixation (44).

7. Essuie-glace selon la revendication 6, caractérisé en ce que les blocs (46, 48) sont fixés par adhérisation.

8. Essuie-glace selon l'une quelconque des revendications 2 à 7, caractérisé en ce que la tige de sortie (40) s'étend selon une direction (A) sensiblement perpendiculaire à l'axe d'articulation (X-X) du bras d'essuie-glace (12) sur la tête d'entraînement (20).

9. Essuie-glace selon l'une quelconque des revendications précédentes, caractérisé en ce que ledit dispositif (36) applique au bras d'essuie-glace (12) un couple complémentaire dont la valeur algébrique est réglable de manière à pouvoir augmenter ou réduire la valeur du couple d'essuyage en fonction d'au moins un paramètre de fonctionnement du véhicule.
